Europäisches Patentamt

European Patent Office

Office européen des brevets

(11) Veröffentlichungsnummer: **0 440 935 A1**

# (12) EUROPÄISCHE PATENTANMELDUNG

(21) Anmeldenummer: 90124159.6

(22) Anmeldetag: **13.12.90**

(51) Int. Cl.5: **F27D 15/02, C04B 7/47, F27B 7/38**

(30) Priorität: **07.02.90 DE 4003679**

(43) Veröffentlichungstag der Anmeldung:
**14.08.91 Patentblatt 91/33**

(84) Benannte Vertragsstaaten:
**AT BE CH DE DK ES FR GB GR IT LI SE**

(71) Anmelder: **KRUPP POLYSIUS AG**
**Graf-Galen-Strasse 17**
**W-4720 Beckum(DE)**

(72) Erfinder: **Kupper, Detlev, Dr.-Ing.**
**Höherweg 3**
**W-4404 Telgte(DE)**
Erfinder: **Adler, Klaus, Dipl.-Ing.**
**Zur dicken Linde 40**
**W-4740 Oelde(DE)**

(74) Vertreter: **Tetzner, Volkmar, Dr.-Ing. Dr. jur.**
**Van-Gogh-Strasse 3**
**W-8000 München 71(DE)**

(54) Verfahren und Vorrichtung zur Kühlung von gebranntem Schüttgut.

(57) Die Erfindung betrifft ein Verfahren sowie eine Anlage zur Kühlung von gebranntem Schüttgut, wobei die Schichthöhe des Gutbettes in einer ersten Kühlzone ausschließlich durch die Fördercharakteristik der gestuft ausgebildeten Rostfläche und die Schwerkraft eingestellt wird. Auf diese Weise wird auf besonders einfache Weise eine sich in Förderrichtung vergrößernde Höhe des Gutbettes in der zur Wärmerekuperation dienenden ersten Kühlzone erreicht.

Fig. 1

EP 0 440 935 A1

# VERFAHREN UND VORRICHTUNG ZUR KÜHLUNG VON GEBRANNTEM SCHÜTTGUT

Die Erfindung betrifft ein Verfahren (entsprechend dem Oberbegriff des Anspruches 1) sowie eine Vorrichtung (gemäß dem Gattungsbegriff des Anspruches 8) zur Kühlung von gebranntem Schüttgut.

Zur Kühlung von gebranntem Schüttgut, beispielsweise Zementklinker, finden Schub- oder Wanderrostkühler Verwendung, wobei das Bett des auf der Rostfläche geförderten Schüttgutes in der zur Wärmerekuperation dienenden ersten Kühlzone eine im wesentlichen konstante Betthöhe aufweist.

Nun setzt sich der Druckverlust des das Gutbett durchsetzenden Kühlluftstromes aus dem Widerstand des Rostes und dem Widerstand der Gutschüttung zusammen. Unterhalb der Rostfläche liegt der Druck vor, der im wesentlichen in den Rostplatten und in der Gutschüttung abgebaut wird. Der unter der Rostfläche gemessene Druck charakterisiert somit den Druckverlust in der Gutschüttung. Mißt man die Drücke in allen Kammern in Längsrichtung des Kühlers, so bezeichnet man dies als Druckprofil.

Bei dem oben erwähnten bekannten Verfahren, bei dem die Gutschüttung in der zur Wärmerekuperation dienenden ersten Kühlzone eine im wesentlichen konstante Betthöhe aufweist, ergibt sich ein in Förderrichtung abfallendes Druckprofil. Wie nähere Untersuchungen zeigen, ist ein solches in Förderrichtung abfallendes Druckprofil für die Wärmerückgewinnung, d. h. den sogenannten Rekuperationsgrad, nicht günstig.

Durch die DE-PS 31 31 514 ist weiterhin ein Verfahren entsprechend dem Oberbegriff des Anspruches 1 sowie eine Vorrichtung gemäß dem Gattungsbegriff des Anspruches 8 bekannt, bei denen sich die Höhe des Gutbettes zumindest in der zur Wärmerekuperation dienenden ersten Kühlzone in Förderrichtung vergrößert. Durch diese Vergrößerung der Schichthöhe in Förderrichtung wird einerseits erreicht, daß zu Beginn der ersten Kühlzone die für eine wirksame Abschreckung des heißen Schüttgutes (zur Vermeidung von Zusammenbackkungen) erwünschte niedrige Schichthöhe vorhanden ist, daß andererseits jedoch im weiteren Verlauf der zur Wärmerekuperation dienenden ersten Kühlzone eine zunehmende Betthöhe und damit eine für eine gute Wärmerückgewinnung wesentliche lange Wärmeaustauschzeit zwischen Gut und Gas zur Verfügung steht.

Bei dem bekannten Verfahren wird die in Förderrichtung zunehmende Betthöhe mittels einer Stauwand erreicht, die am Ende der ersten Kühlzone von oben her in das Gutbett eintaucht und die das Gut in der ersten Kühlzone anstaut. Bedenkt man jedoch, daß das gebrannte Schüttgut auch noch am Ende der ersten Kühlzone eine beträchtliche Temperatur aufweist und darüber hinaus meist eine große Härte und Abriebfestigkeit besitzt, so wird verständlich, daß eine solche, in die Gutschüttung eintauchende Stauwand einem außerordentlich starken Verschleiß ausgesetzt ist und infolgedessen schon nach verhältnismäßig kurzer Betriebszeit ausgewechselt werden muß, was sehr unerwünschte Stillstandszeiten bedingt.

Der Erfindung liegt daher die Aufgabe zugrunde, ein Verfahren entsprechend dem Oberbegriff des Anspruches 1 sowie eine Vorrichtung gemäß dem Gattungsbegriff des Anspruches 8 so auszubilden, daß eine sich in Förderrichtung vergrößernde Höhe des Gutbettes in der zur Wärmerekuperation dienenden ersten Kühlzone auf eine in anlagentechnischer und betriebsmäßiger Hinsicht besonders einfache Weise erreicht wird.

Diese Aufgabe wird erfindungsgemäß durch die kennzeichnenden Merkmale der Ansprüche 1 und 8 gelöst. Zweckmäßige Ausgestaltungen der Erfindung sind Gegenstand der Unteransprüche.

Bei dem erfindungsgemäßen Verfahren wird die Schichthöhe des Gutbettes in der ersten Kühlzone ausschließlich durch die Fördercharakteristik der gestuft ausgebildeten Rostfläche und die Schwerkraft eingestellt. Unter "Fördercharakteristik" der gestuft ausgebildeten Rostfläche ist hierbei zum einen die Rostplattengeometrie und zum andern die Schubzahl der Roststufen zu verstehen.

Charakteristisch für die Erfindung ist die stufenweise Vergrößerung der Schichthöhe in der zur Wärmerekuperation dienenden ersten Kühlzone. Auf der ersten Stufe wird dabei eine normale Betthöhe eingestellt, bei der das gebrannte Schüttgut schnell bewegt und somit ein Zusammenbacken verhindert wird.

Auf den folgenden Stufen vergrößert sich die Schichthöhe, wobei zweckmäßig ein konstantes oder in Förderrichtung ansteigendes Druckprofil eingestellt wird, was einen besonders guten Rekuperationsgrad ermöglicht.

Wesentlich für die erfindungsgemäße Lösung ist dabei, daß die sich in Förderrichtung vergrößernde Schichthöhe ohne Verwendung eines in die Gutschüttung eintauchenden Stauelementes erreicht wird, nämlich ausschließlich durch die Fördercharakteristik der gestuft ausgebildeten Rostfläche und die Schwerkraft. Es ergibt sich auf diese Weise ein frei fließendes Gutbett mit einer nicht von Stauelementen beeinflußten Oberfläche. Der überaus störende Verschleiß an Stauelementen wird auf diese Weise ebenso vermieden wie die hierdurch bedingten Betriebsstörungen.

Einige Ausführungsbeispiele der Erfindung sind in der Zeichnung veranschaulicht. Es zeigen

Fig.1 bis 4    schematische Darstellungen einiger Ausführungsbeispiele der Erfindung,

Fig.5 bis 7    schematische Darstellungen verschiedener Gutbettverteilungen in der ersten und zweiten Kühlzone.

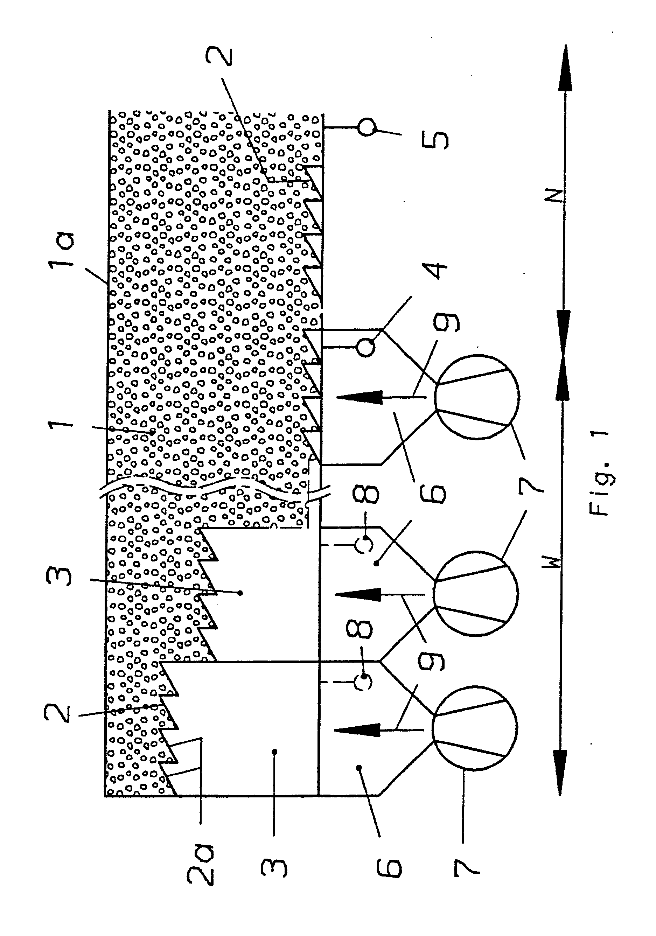

Die in Fig.1 schematisch dargestellte Vorrichtung zur Kühlung von gebranntem Schüttgut enthält eine zur Wärmerekuperation dienende erste Kühlzone W und eine zur Nachkühlung dienende zweite Kühlzone N. Eine das Schüttgut 1 nacheinander durch die erste und zweite Kühlzone fördernde Rostfläche 2 ist in diesem Ausführungsbeispiel zumindest in der ersten Kühlzone W gestuft ausgebildet. Die Fördergeschwindigkeit der einzelnen Stufen 3 der Rostfläche 2 wird für die erste Kühlzone W über einen gemeinsamen Antrieb 4 eingestellt. Der Betrieb der Rostfläche 2 in der zweiten Kühlzone N erfolgt über einen gesonderten Antrieb 5.

Unterhalb der Rostfläche 2 der ersten Kühlzone W ist jeder Stufe 3 eine Belüftungskammer 6 zugeordnet, die über ein Gebläse 7 mit Luft beaufschlagt wird. In der zweiten Kühlzone N können gleichfalls Belüftungskammern 6 vorgesehen werden (in Fig.1 jedoch nicht dargestellt).

Das gebrannte Schüttgut 1 wird auf der gestuft ausgebildeten Rostfläche 2 gefördert und mittels eines die Rostfläche 2 und das Gutbett 1 durchsetzenden Luftstromes (Pfeile 9) in der zur Wärmerekuperation dienenden ersten Kühlzone W und der zur Nachkühlung dienenden zweiten Kühlzone N gekühlt.

Untersuchungen haben gezeigt, daß sich bei einer gleichbleibenden Höhe des Gutbettes über der Rostfläche ein in der Regel abfallendes Druckprofil des das Gutbett durchsetzenden Luftstromes ergibt. Wird nun die Höhe des Gutbettes 1 in Förderrichtung zumindest in der ersten Kühlzone vergrößert, wird das abfallende Druckprofil ausgeglichen und es kann sogar ein ansteigendes Druckprofil erreicht werden, wodurch sich der Wärmerekuperationsgrad entscheidend verbessert.

Im Ausführungsbeispiel der Fig.1 wird die Schichthöhe des Gutbettes 1 in der ersten Kühlzone W ausschließlich durch die Fördercharakteristik der gestuft ausgebildeten Rostfläche 2 und die Schwerkraft eingestellt. Unter Fördercharakteristik ist hierbei einerseits die Ausbildung einzelner Rostelemente 2a der Rostfläche 2 und andererseits die Fördergeschwindigkeit der Rostfläche zu verstehen. Die Schichthöhe des Gutbettes 1 der ersten und zweiten Kühlzone kann über die gesonderten Antriebe 4 und 5 unterschiedlich eingestellt werden.

In einer weiteren Ausgestaltung des Ausführungsbeispieles der Fig.1 weisen die einzelnen Stufen 3 der Rostfläche 2 in der ersten Kühlzone W gesonderte, gestrichelt dargestellte Antriebe 8 auf. Mit der individuellen Einstellung der Fördergeschwindigkeit in den einzelnen Stufen läßt sich die Höhe des Gutbettes den Eigenschaften des jeweils zu kühlenden Schüttgutes anpassen. Insbesondere kann dadurch erreicht werden, daß im Anfangsbereich der zur Rekuperation dienenden ersten Kühlzone W das Schüttgut mit einer relativ kleinen Höhe des Gutbettes relativ schnell gefördert wird, um es dadurch wirksam abzuschrecken und Zusammenbackungen zu vermeiden. Im weiteren Verlauf der ersten Kühlzone W vergrößert sich die Höhe des Gutbettes, so daß für eine gute Wärmerückgewinnung eine ausreichend lange Wärmeaustauschzeit zwischen Schüttgut und Kühlgas zur Verfügung steht.

Eine weitere Möglichkeit in diesem Zusammenhang bietet das Ausführungsbeispiel der Fig.1 dadurch, daß der die Rostfläche 2 und das Schüttgut 1 durchsetzende Luftstrom (Pfeile 9) in zumindest einzelnen Bereichen (Stufe 3) beider Kühlzonen eine unterschiedliche Geschwindigkeit aufweist.

Zur Veränderung der Fördercharakteristik einzelner Stufen 3 besteht neben einer unterschiedlichen Einstellung der Antriebe 8 auch die Möglichkeit, die Rostelemente 2a einzelner Stufen 3 der Rostfläche 2 der ersten Kühlzone W unterschiedlich auszubilden.

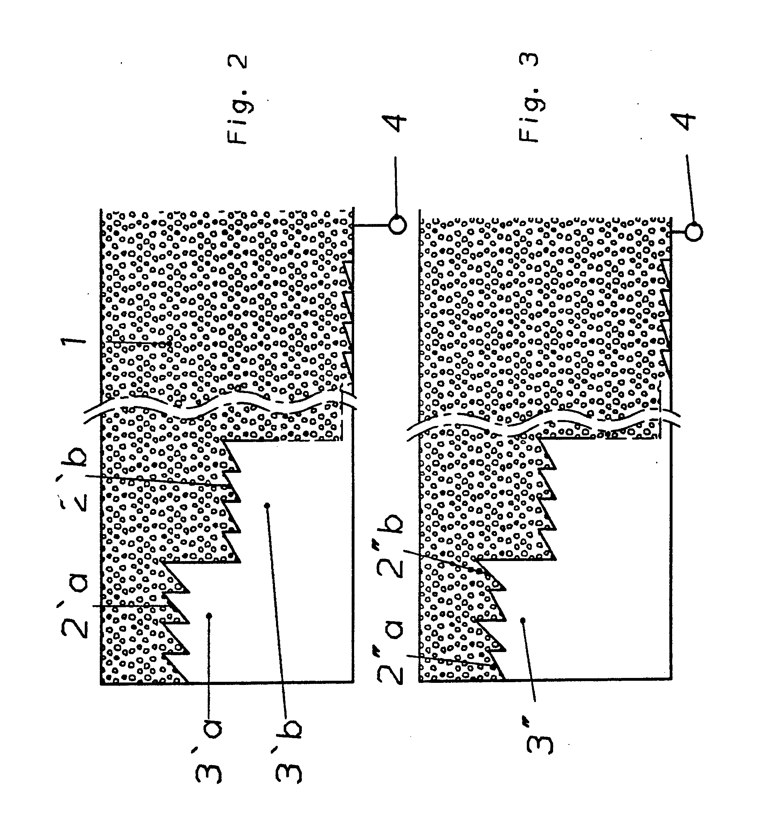

In dem Ausführungsbeispiel der Fig.2 ragen die Rostelemente 2'a der Stufe 3'a steiler in das Schüttgut 1 hinein als die Rostelemente 2'b der Stufe 3'b. Bei gleicher Geschwindigkeit der Rostelemente in beiden Stufen 3'a und 3'b wird das Schüttgut 1 über der ersten Stufe 3'a schneller gefördert werden, da durch den tieferen Eingriff der Rostelemente 2'a in das Schüttgut 1 die höheren Schichten des Schüttgutes 1 über der Stufe 3'a besser mitgenommen werden.

Die unterschiedliche Ausgestaltung einzelner Stufen kann somit die gesonderten Antriebe 8 der Fig.1 ersetzen, so daß für die erste Kühlzone W oder sogar für beide Kühlzonen nur ein Antrieb nötig ist. Es ist jedoch im Rahmen der Erfindung auch möglich, trotz unterschiedlicher Ausgestaltung einzelner Stufen gesonderte Antriebe einzelner Stufen vorzusehen.

In Fig.3 ist ein weiteres Ausführungsbeispiel dargestellt, bei dem innerhalb einer Stufe 3" einzelne Rostelemente 2"a, 2"b unterschiedlich ausgebildet sind.

Auf diese Weise ist es möglich, den zu einer bestimmten Stufe gehördenden Teil der Rostfläche einer einerseits entsprechend ihrer Position innerhalb der Kühlzone (entsprechend der benötigten Fördergeschwindigkeit) und andererseits angepaßt an das zu kühlende Schüttgut (Schüttwinkel, Korngröße, ...) auszubilden.

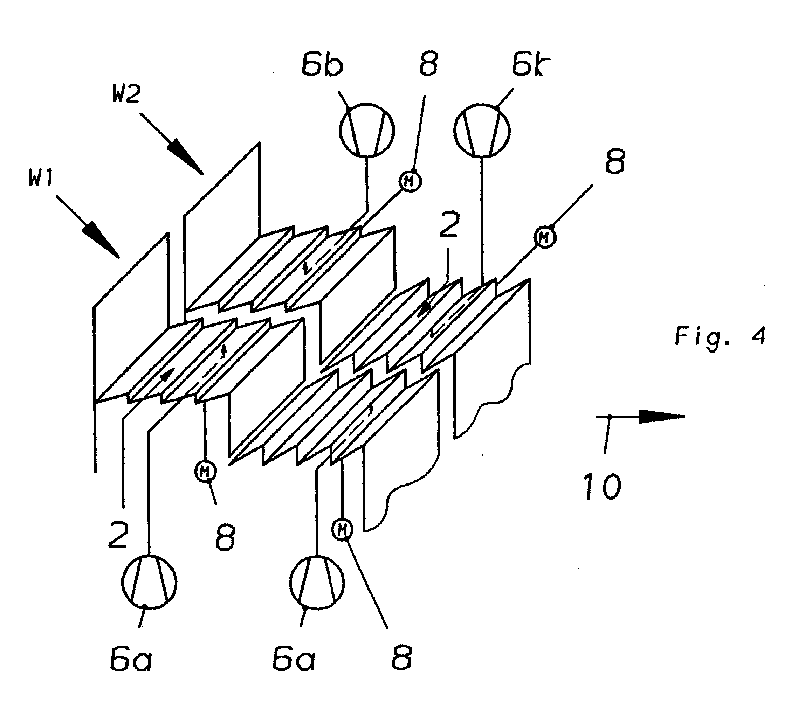

Ein weiteres Ausführungsbeispiel der Erfindung ist in einer räumlichen Darstellung in Fig.4 dargestellt. Hierbei ist die erste Kühlzone W in Förderrichtung (Pfeil 10) zumindest teilweise längsgeteilt, so daß sich die erste Kühlzone W in zwei Teile W1 und W2 unterteilt. Im Rahmen der Erfindung sind jedoch auch mehrere nebeneinanderliegende Teile möglich.

Die einzelnen Teile W1 und W2 können gesonderte Antriebe aufweisen. Dabei ist entweder für den gesamten Teil ein Antrieb vorgesehen oder für jede Stufe des Teiles ein gesonderter Antrieb 8. Den einzelnen Teilen W1 und W2 sind gesondert beaufschlagbare Belüftungskammern 6a bzw. 6b zugeordnet. In dem Ausführungsbeispiel der Fig.4 weist jede einzelne Stufe eines Teiles eine Belüftungskammer auf. Es ist jedoch auch denkbar, innerhalb eines Teiles eine Belüftungskammer mehreren Stufen zuzuweisen.

Im Ausführungsbeispiel der Fig.1 erstreckt sich die Oberfläche 1a des Gutbettes in etwa ebener Form über beide Kühlzonen.

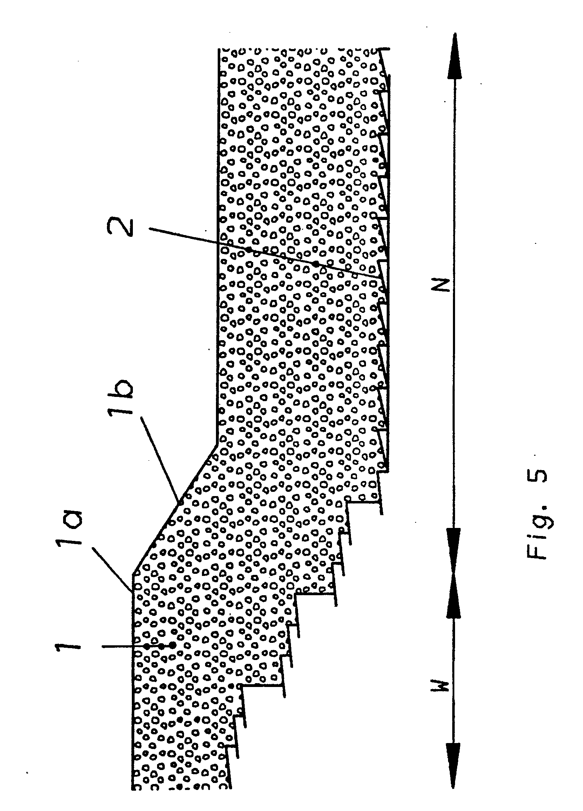

Die Oberfläche 1''a des Ausführungsbeispieles der Fig.5 erstreckt sich in etwa ebener Form über die erste Kühlzone W und geht mit einer Stufe 1''b in die zweite Kühlzone N über. Eine derartige Formung der Oberfläche 1''a gegenüber dem Ausführungsbeispiel der Fig.1 kann sich beispielsweise durch eine unterschiedliche Fördercharakteristik im Übergangsbereich zwischen beiden Kühlzonen, insbesondere durch eine höhere Fördergeschwindigkeit in der zweiten Kühlzone N, ergeben.

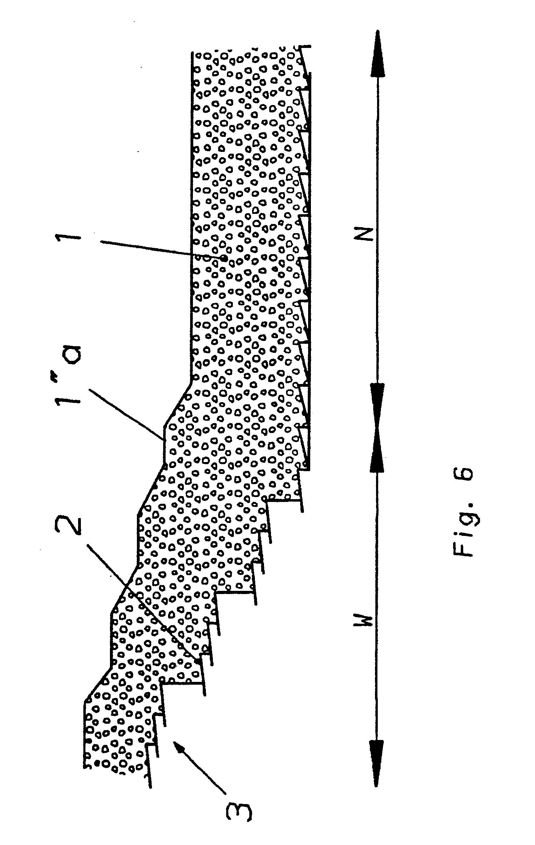

Im Ausführungsbeispiel der Fig.6 ist die Oberfläche 1''a des Gutbettes in der ersten Kühlzone W etwa entsprechend der Stufung der Rostfläche 2 der ersten Kühlzone W gestuft. Die Stufung kann sich dabei einerseits durch die Fördercharakteristik einzelner Stufen 3 und andererseits durch die unterschiedliche Höhe benachbarter Stufen ergeben.

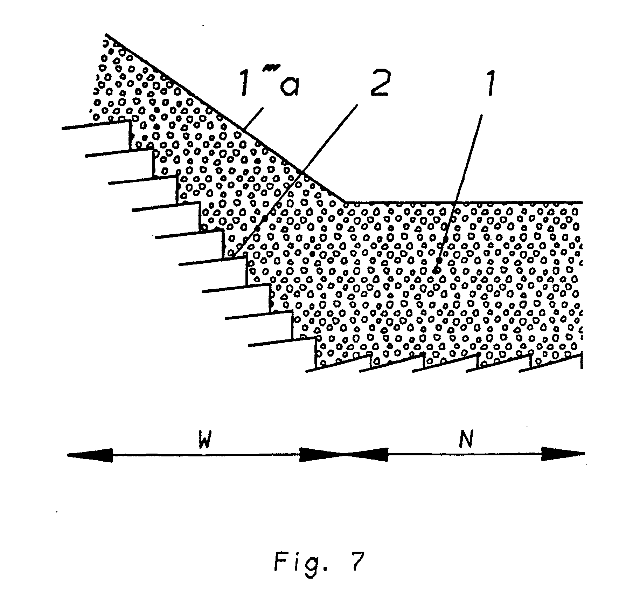

Im Ausführungsbeispiel der Fig.7 ist die in etwa ebene Oberfläche 1'''a des Gutbettes 1 in der ersten Kühlzone W stärker geneigt als in der zweiten Kühlzone N.

Im Rahmen der Erfindung ist es auch möglich, die Stufung in der ersten Kühlzone W immer kleiner werden zu lassen, so daß sich im Grenzfall eine schiefe Ebene ergibt. Der Neigungswinkel dieser Ebene könnte dann auch im Grenzfall gegen Null gehen.

**Patentansprüche**

1. Verfahren zur Kühlung von gebranntem Schüttgut (1), das auf einer Rostfläche (2) gefördert und mittels eines die Rostfläche (2) und das Gutbett durchsetzenden Luftstromes in einer zur Wärmerekuperation dienenden ersten Kühlzone (W) und einer zur Nachkühlung dienenden zweiten Kühlzone (N) gekühlt wird, wobei sich die Höhe des Gutbettes zumindest in der ersten Kühlzone (W) in Förderrichtung vergrößert,

dadurch gekennzeichnet, daß die Schichthöhe des Gutbettes in der ersten Kühlzone (W) ausschließlich durch die Fördercharakteristik der gestuft ausgebildeten Rostfläche (2) und die Schwerkraft eingestellt wird.

2. Verfahren nach Anspruch 1, dadurch gekennzeichnet, daß in der ersten Kühlzone (W) eine höhere Fördergeschwindigkeit der Rostfläche (2) als in der zweiten Kühlzone (N) verwendet wird.

3. Verfahren nach Anspruch 1, dadurch gekennzeichnet, daß der die Rostfläche (2) und das Gutbett durchsetzende Luftstrom (9) in zumindest einzelnen Bereichen beider Kühlzonen eine unterschiedliche Geschwindigkeit aufweist.

4. Verfahren nach Anspruch 1, dadurch gekennzeichnet, daß sich die Oberfläche (1a) des Gutbettes in etwa ebener Form über beide Kühlzonen erstreckt.

5. Verfahren nach Anspruch 1, dadurch gekennzeichnet, daß sich die Oberfläche (1'a) des Gutbettes in etwa ebener Form über die erste Kühlzone (W) erstreckt und mit einer Stufe (1'b) in die zweite Kühlzone (N) übergeht.

6. Verfahren nach Anspruch 1, dadurch gekennzeichnet, daß die Oberfläche (1''a) des Gutbettes in der ersten Kühlzone (W) etwa entsprechend der Stufung der Rostfläche (2) der ersten Kühlzone (W) gestuft ist.

7. Verfahren nach Anspruch 1, dadurch gekennzeichnet, daß die etwa ebene Oberfläche (1'''a) des Gutbettes in der ersten Kühlzone (W) stärker geneigt ist als in der zweiten Kühlzone (N).

8. Vorrichtung zur Kühlung von gebranntem Schüttgut (1), enthaltend
   a) eine zur Wärmerekuperation dienende erste Kühlzone (W),
   b) eine zur Nachkühlung dienende zweite Kühlzone (N),
   c) eine das Schüttgut (1) in der ersten und zweiten Kühlzone fördernde und in Förderrichtung wenigstens zum Teil gestufte oder geneigte Rostfläche (2),

d) wenigstens eine unterhalb der Rostfläche (2) angeordnete Belüftungskammer (6) zur Durchsetzung des Gutbettes mit einem Luftstrom (9),

gekennzeichnet durch

e) eine gestufte Ausbildung der Rostfläche (2) der ersten Kühlzone (W),
f) sowie Mittel zur Einstellung der Schichthöhe des Gutbettes in der ersten Kühlzone (W) ausschließlich durch die Fördercharakteristik der Rostfläche (2) und die Schwerkraft.

9. Vorrichtung nach Anspruch 8, dadurch gekennzeichnet, daß die einzelnen Stufen (3) der Rostfläche (2) in der ersten Kühlzone (W) einen gesonderten Antrieb (8) aufweisen.

10. Vorrichtung nach Anspruch 8, dadurch gekennzeichnet, daß einzelne Stufen (3'a, 3'b) der Rostfläche (2) der ersten Kühlzone (W) unterschiedlich ausgebildet sind.

11. Vorrichtung nach Anspruch 8, dadurch gekennzeichnet, daß innerhalb einer Stufe (3") unterschiedlich ausgebildete Rostelemente (2"a, 2"b) vorgesehen sind.

12. Vorrichtung nach Anspruch 8, dadurch gekennzeichnet, daß jeder Stufe (3) der Rostfläche (2) der ersten Kühlzone (W) eine eigene Belüftungskammer (6) zugeordnet ist.

13. Vorrichtung nach Anspruch 8, dadurch gekennzeichnet, daß die erste Kühlzone (W) in Förderrichtung (10) zumindest teilweise längsgeteilt ist, wobei die einzelnen Teile (W1, W2) vorzugsweise gesonderte Antriebe aufweisen.

14. Vorrichtung nach Anspruch 8, dadurch gekennzeichnet, daß die erste Kühlzone (W) in Förderrichtung (10) zumindest teilweise längsgeteilt ist, wobei einzelnen Teilen (W1, W2) gesondert beaufschlagbare Belüftungskammern (6a, 6b) zugeordnet sind.

Fig. 1

EP 0 440 935 A1

2'a    2'b    1

3'a

3'b

Fig. 2

2"a    2"b

3"

Fig. 3

4

4

EP 0 440 935 A1

Fig. 4

EP 0 440 935 A1

Fig. 5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A-3 522 83   (SMIDTH & CO.)<br>* Patentanspruch 1; Figuren *<br>— — — | 1,2,4,8,9,<br>10 | F 27 D 15/02<br>C 04 B 7/47<br>F 27 B 7/38 |
| X | FR-A-2 601 761   (PETERO S.A. CLAUDIUS)<br>* Ansprüche; Figuren *<br>— — — | 1,2,3,4,8,<br>9,10,12 | |
| A | US-A-3 831 291   (K.H. KAYATZ)<br>* Ansprüche; Figur 1 *<br>— — — | 1 | |
| A | EP-A-0 072 018   (VON WEDEL)<br>* Ansprüche; Figuren *<br>— — — | 12 | |
| A | ZEMENT-KALK-GIPS, Band 40, Nr. 2, Februar 1987, Seiten 82-85; K. VON WEDEL: "Grate cooling of cement clinker with horizontal air jets"<br>— — — | | |
| A | FR-A-2 323 653   (FIVES-CAIL BABCOCK)<br>— — — — — | | |
| | | | **RECHERCHIERTE SACHGEBIETE (Int. Cl.5)**<br><br>F 27 D<br>F 27 B<br>C 04 B |

Der vorliegende Recherchenbericht wurde für alle Patentansprüche erstellt

| Recherchenort | Abschlußdatum der Recherche | Prüfer |
|---|---|---|
| Den Haag | 29 Januar 91 | COULOMB J.C. |